# EUROPEAN PATENT APPLICATION

(11) **EP 0 987 220 A1**
(43) Date of publication of application: **22.03.2000**
(21) Application number: 98203134.6
(22) Date of filing: 17.09.1998
(51) Int. Cl.: C01B 37/02, C01B 37/00, C01B 39/02, C01B 39/08

(54) **Mesoporous amorphous silicate materials and process for the preparation thereof**

(71) Applicant: Technische Universiteit Delft, 2628 BL Delft (NL); ABB Lummus Global Inc., Bloomfield, New Jersey 07003-3096 (US)
(72) Inventor: Jansen, Jacobus, 2628 BL Delft (NL); Shan, Zhiping, 2628 BL Delft (NL)
(74) Representative: Smulders, Theodorus A.H.J., Ir.

(57) **Abstract**

The invention is directed to a precursor for a mesoporous silicate material, to a mesoporous silicate material and to a process for preparing these.

## Description

The invention is directed to mesoporous, amorphous silicate materials and to a process for the preparation thereof.

Mesoporous amorphous silicate materials, especially when they are highly porous, have high potential for numerous applications in chemistry due to their catalytic activity and high surface area. Possible examples thereof are in the petroleum chemistry, fine chemistry and gas and liquid absorption. More in particular, there is a need for well-structured materials that have carefully controlled pore sizes.

Zeolites and related materials possess a well arranged pore system and have a uniform pore size. However, these materials tend to possess only one size of pores, and further these materials are rather expensive to produce, especially when large pores are required, such as pores in the mesopore size area, i.e. between 2 and 50 nm, more in particular when these mesopores have to be introduced by post treatment, such as steaming.

Accordingly it is an object of the invention to provide a silicate material having a pore structure, wherein at least part of its pores are in the mesopore size range, which material can be prepared in an easy and reproducible manner.

It is also an object of the present invention to provide a highly porous amorphous silicate material, having a bimodal pore structure, which material has pores both in the micropore range and in the mesopore range.

Furthermore, it is an object of the present invention to provide a silicate material that can easily be modified to have advantageous properties, such as specific catalytic properties, for example by replacing part of the silicon atoms by metal atoms such as aluminium, titanium, vanadium, gallium, iron and the like. Other objects and advantages will become clear from the subsequent description.

The invention is based on the basic concept that amorphous mesoporous materials can be prepared in an easy and simple manner by the use of specific template molecules, resulting in materials having advantageous properties, such as specific pore structure, high pore volume and the ability to be modified, both on the surface and in the material itself. The method is i.a. based on the use of self-assembling chemicals (not particles) as basic materials in the production.

In a first embodiment the invention resides in a novel material, said material being a precursor for a mesoporous amorphous silicate material, comprising a silicate structure with mesopores having an average pore size of from 2 to 25 nm, said mesopores being filled with template molecules having the capability of providing hydrogen bonding with silica. In a preferred embodiment the template molecules have been selected from the group of triethanolamine, ??,

According to another embodiment the material of the invention is a mesoporous, amorphous silicate material having a bimodal structure of micropores and mesopores, domains of said micropores being connected to said mesopores, wherein the average mesopore size, determined by N₂-porosimetry, is between 2 and 25 nm, and the average micropores size, determined by N₂-porosimetry, is between 0.7 and 1.5 nm, preferably between 0.8 and 1.2 nm.

Preferred embodiments have been disclosed in the dependent claims.

The material of the invention is accordingly a mesoporous amorphous silicate material, which optionally may contain metal ions, such as aluminium or titanium, as part of the mesoporous structure, either added during the preparation and incorporated directly during synthesis, or which may be introduced into the lattice by exchange of the silicon or aluminium ions after production. Depending on the nature of the other metals ions the properties of the material differ. For example, by incorporating aluminium it is possible to give the material acidic properties, whereas some other metals may result in alkaline properties, thus making it useful as oxidation catalyst.

The material may have a bimodal pore structure consisting of on the one hand, interconnected mesopores, i.e. pores having a pore diameter between 2 and 25 nm. The mesopores are formed by cages that are interconnected, which means that they have a kind of "sausage structure", the pores having a somewhat spherical shape, generally with connections to other pores at two opposite ends thereof. On the other hand, the material also contains domains or phases of micropores, which are connected to micropores. Said micropores have an average diameter between 0.7 and 1.5 nm.

The material having a biomodal pore structure is extremely suitable for carrying out all kinds of chemical reactions which require, on the one hand large pores and, on the other hand small pores. Examples thereof are reactions where large molecules can easily enter the system via the mesopores and are then reacted or converted in the micropores. This may result in selectivity reactions. Another advantage of creating ordered microdomains in the walls of the mesoporous structure is the possibility of introducing catalytic sites with higher acid strength than hitherto possible in purely mesoporous materials.

Another example of the suitability of the materials are in the petroleum chemistry, wherein large molecules are first converted in the mesopores into smaller molecules which subsequently reacted in the micropores. In this way one may get very controlled and selective conversion of, for example, oil fractions. A further use of the materials of the invention is in catalytic distillation operations.

The silicate materials may consist of silicon and oxygen only. Part of the silicon may be replaced by another metal, preferably by adding a source of said metal during the preparation of the material. Examples of suitable metals are titanium, vanadium, zirconium, gallium, manganese, zinc, iron and aluminium.

Furthermore it is possible to exchange, after preparation of the material, cations in the system with other ions, such as those of or alkalimetal. In this manner carefully controlled properties can be generated in the silicate material. For example, the presence of titanium as additional component creates oxidation properties on the internal surface of the material, which may be a very interesting feature, especially in fine chemistry.

The mesoporous material according to the invention is a pseudo amorphous material. According to one embodiment it will have no peak in an XRD diffraction pattern, however, it may be possible, and this is actually preferred, that the material has one peak in the XRD diffraction pattern, where 2θ is between 0.5 and 2.5°. The presence of one peak means that the material has an extremely regular structure in one dimension, without being crystalline. Said regular structure is determined by a distribution of wall thicknesses, in combination with a narrow size distribution of the sizes of the mesopores. The wall to wall distance of the mesopores will preferably be between 3 and 7 nm.

In case highly ordered microdomains are also formed in the walls of the mesoporous structure they will be invisible to the X-ray detection since the repeating units of the micro-domain structure will be too small to detect. However, the micro-domains will measurably affect the acidity of the material.

The material according to the invention generally has an average surface area as determined by BET (N₂) of between 400 and 1200 m²/g. The pore volume determined by nitrogen absorption will generally be between 0.3 and 1.9 ml/g.

An important advantage of the materials of the present invention is the stability thereof. It has been found that the material is more stable than the standard mesoporous materials, such as MCM 1-41 of Mobil. This stability is determined in terms of decrease of intensity of the most important peak in XRD, after treatment of the material in boiling water.

The invention is also directed to a method of preparing an amorphous mesopore silicate material having bimodal pore distribution as defined hereinabove.

More in particular, the material is prepared by a process which comprises providing an aqueous phase having dispersed therein a silica source. This may be either a solution of a suitable silicate or a dispersion of a solid silica or a silica sol. Generally, the pH of the aqueous phase will be above 7. In this aqueous phase an organic material will be dispersed, which has some very specific properties. This organic material should, on the one hand, have the property that it has a proper affinity to the inorganic material, i.e. the silica source. More in particular it is preferred that it interacts by hydrogen bonding. On the other hand it should not be too hydrophobic that it would form one separate phase. Finally it is advantageous if the organic material has a relatively high boiling point, such as at least 150°C. Examples of suitable materials are triethanolamine, glycerol, diethylene glycol, triethylene glycol and tetraethylene glycol.

Optionally the aqueous phase may contain metal ions such as derivable from an aluminium salt. Depending on the type of silicate source, the material is first aged, at room temperature, to expel any organic compounds from the silica source, such as from tetraethyl orthosilicate. At this stage of the process it is presumed that a silicate network is formed, having incorporated therein the template or organic molecules which still interact with the silicate. Depending on the type and the amount the organic molecules will form larger or smaller assemblies within the network. After the ageing stage the material is subsequently gradually heated to about the boiling point of the aqueous phase. Thereby the water evaporates and possibly the organic components generated from the silicate source, such as methanol or ethanol. During this drying stage the organic molecules should not be removed from the system to a substantial degree. Accordingly the organic material should preferably have a boiling point above, at least, 150°C.

After the drying stage, which is maintained for about 6 to 48 hours after the boiling point of the system has been reached, the temperature of the system is raised again to a calcination temperature. At this stage the structure of the material is finally formed, while furthermore the organic molecules are expelled from the system and can be recovered for re-use. If necessary, the material may be washed, although generally the type of components are such that no washing is necessary, as no additional components will be present in the system. Due to the method of preparation no waste water is produced. A further advantage of the invention resides therein, that the preparation method is highly efficient, due to the 100% utilisation of the silica and the possibility of recovery of the templating molecules.

If necessary, further steps may be taken to add metal ions such as titanium, vanadium, zirconium, gallium, manganese, zinc, iron or alkalimetal. Also it is possible to treat the surface layer of the inside of the pores in such a manner that the silicate material is converted to a zeolitic structure. In this manner one has obtained, with a bimodal pore size, a material having pores with a zeolitic inside structure. This may be done by "skin modification", which means that a suitable metal or template ion is positioned in the wall, followed by a heat treatment. This method of skin modification has been disclosed in the plenary lecture "Zeolite Coatings" by J.C. Jansen, at the 12^{th} IZC, Baltimore, July 1998 and in the references cited in this lecture.

Also it is possible to adapt the properties of the material by incorporation on or in the surface of a catalytically active material such as a precious metal, nickel and the like. It is also possible to attach (graft) functional components on the wall.

In the present description mention has been made of micropore sizes and mesopore sizes. Micropores are defined as pores having a diameter of less than 2.0 nm. Mesopores are defined as pores in the range of 2 to 50 nm. Average micropore size and average mesopore sizes are determined using a Quantachrome Autosorb 6B. The sample is evacuated in vacuum for 16 hours at 350°C. The N₂-ad- and desorption isotherm are measured at 77K. The micropore data are interpreted using the Horvath-Kawazoe model, and the BJK model was used to interpret the mesopore data.

The invention is now elucidated on the basis of some examples.

### EXAMPLES

### Example 1

21.0 g triethanolamine (97%, ACROS) was added into a mixture of 14.5 g tetraethyl orthosilicate (98%, ACROS) and 24.6 g demineralized water under stirring. The above mixture was aged at room temperature for 6 hrs before it was dried at 100°C for 24 hrs. The dried mixture was calcined in air at 500°C for 4 hrs and subsequently at 550°C for 10 hrs.

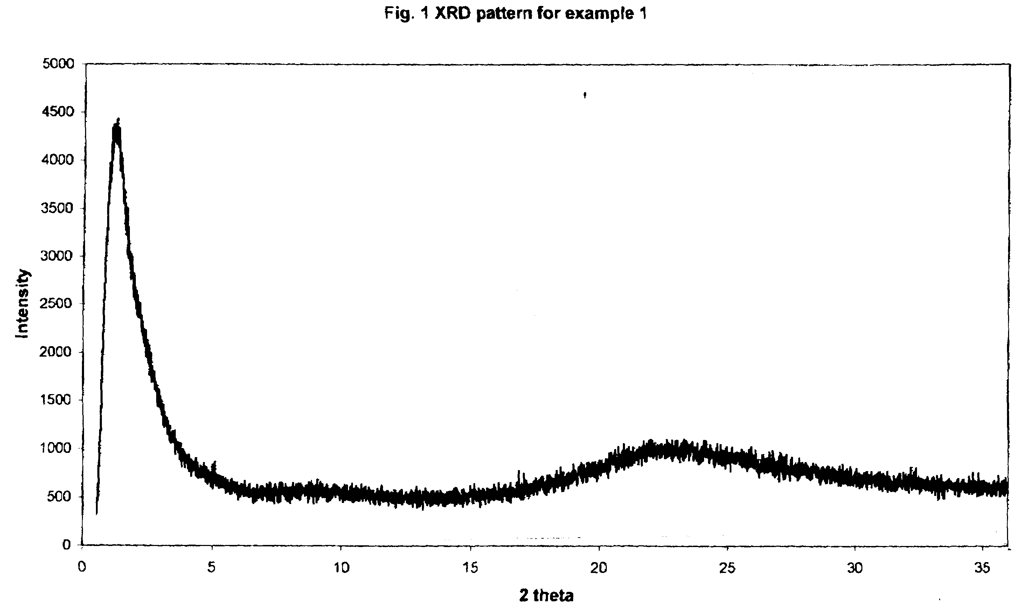

The XRD pattern of the calcined powder was measured using a Philips PW 1840 (X-Ray tube:Cu LFF 40 KV 50 MA) of which the result is presented in Fig. 1.

### Examples 2-6

Preparation of synthesis mixture consisted of following three steps: (1) Mixture 1 was prepared by dissolving 1.3 g aluminium isopropoxide into 39.1 g TPAOH aqueous solution. (2) 98.5 g triethanolamine (97% ACROS) was added into the mixture 1 together with 14.0 g demineralized water and 13.1 g TPABr. (3) 34.1 g tetraethyl orthosilicate (98%, ACROS) was added into the mixture made in step 2 under stirring.

The final mixture was aged at room temperature for 0, 6, 18, 24 and 48 hrs before it was dried at 100°C for 18 hrs. The dried mixture was calcined in air at 500°C for 4 hrs and subsequently at 550°C for 10 hrs.

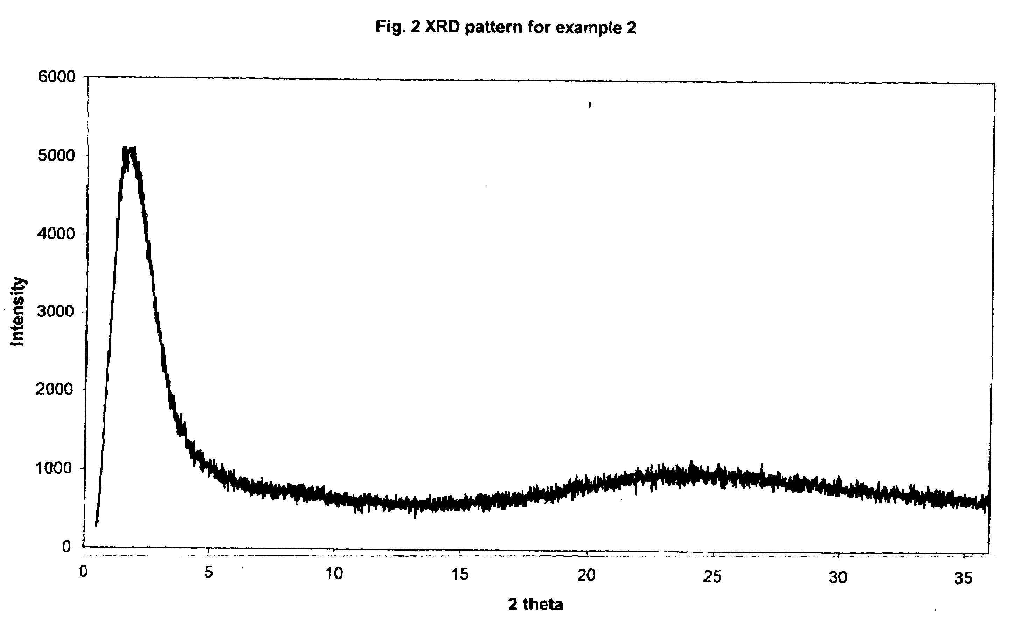

The XRD pattern of the calcined powder was measured, the result of which is presented in Fig. 2.

### Examples 7-10

Preparation of the synthesis mixture is similar to Examples 2-6 except that triethanolamine was replaced by four other solvents: (1) 48.2 g tetraethylene glycol; (2) 39.3 g triethylene glycol; (3) 29.4 g diethylene glycol and (4) 26.1 g glycerol.

In each experiment a solvent as mentioned above was added into the mixture of 2.2 g aluminium isopropoxide, 33.1 g TPAOH (25%, ACROS) aqueous solution and 80.2 g demineralized water. Then 55.3 g tetraethylorthosilicate (98%, ACROS) was added into the above mixture under stirring.

The final mixture was aged at room temperature for 24 hrs before it was dried at 100°C for 24 hrs. The dried mixture was calcined in air at 500°C for 4 hrs and subsequently at 550°C for 10 hrs.

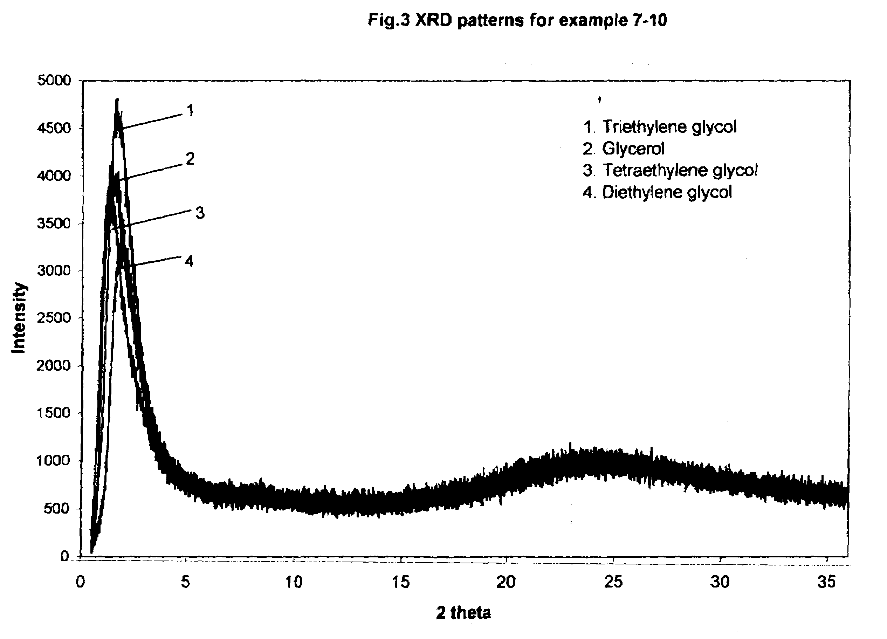

The XRD pattern of the calcined powder was measured as above, the result of which are presented in Fig. 3.

### Example 11

Preparation of synthesis mixture consisted of following three steps:
(1) mixture 1 was prepared by dissolving 0.88 g aluminium isopropoxide into 23.3 g TPAOH aqueous solution. (2) 24.7 grams triethanolamine (97%, ACROS) was added into the mixture 1 together with 2.5 g demineralized water. (3) 48.7 grams tetraethylorthosilicate (98%, ACROS) was added into the mixture made in step 2 under stirring.

The final mixture was transferred into an autoclave and hydrothermally treated at 160°C for 6 hrs before it was dried at 100°C for 18 hrs. The dried mixture was calcined in air at 500°C for 4 hrs and subsequently at 550°C for 10 hrs.

### Examples 12 and 13

First, 0.72 g aluminium isopropoxide was dissolved into 25.3 g TEAOH (35%, Aldrich) or 16.3 g TMAOH (25%, ACROS) aqueous solution. Second, 18.5 g TEOS together with 10.6 g demineralized water was added into above mixture under stirring. Then a mixture of 6.6 g triethanolamine and 18.1 g glycerol was immediately put into above mixture made in second step under stirring.

The final mixture was aged at room temperature for 48 hrs and then was dried at 120°C for 38 hrs. The dried mixture was calcined using a temperature programme: Temperature was raised from room temperature to 550°C at a rate of 1°C/min and kept at 550°C for 10 hrs.

### Example 14

48.5 g TEOS was added into the mixture of 70.1 g triethanolamine and 55.3 g TPAOH (25%, ACROS). A Al₂(SO₄)₃ solution, in which 6.2 g Al₂(SO₄)₃·18H₂O was dissolved into 12.0 g demineralized water, was added into the above mixture under stirring.

Final mixture without ageing was dried at 100°C for 24 hrs. The dried mixture was calcined at 500°C for 6 hrs in N₂ and then at 550°C for 10 hrs in air.

All samples of the above Examples were tested for acidity using NH₃-TPD. All samples showed mainly Lewis-acidity and for a small part some Brønsted-acidity (desorption temperatures resp. 190°C and 450°C).

Determination of the stability of the material by comparison of the intensity of the strongest peak in XRD before and after treatment in boiling water showed that the material was extremely stable.

### Example 15

25.29 g of triethanolamine (97%, ACROS) was added dropwise into a mixture of 1.13 g of titanium (IV) N-butoxide (99%, ACROS) and 34.95 g of tetraethylorthosilicate (98%, ACROS). Subsequently, 17.29 g of tetraethylammonium hydroxide (35%, ACROS) was added under stirring.

A homogeneous mixture was obtained, which was aged for 4 h at room temperature, dried at 100°C for 24 h and calcined at 700°C for 10 h.

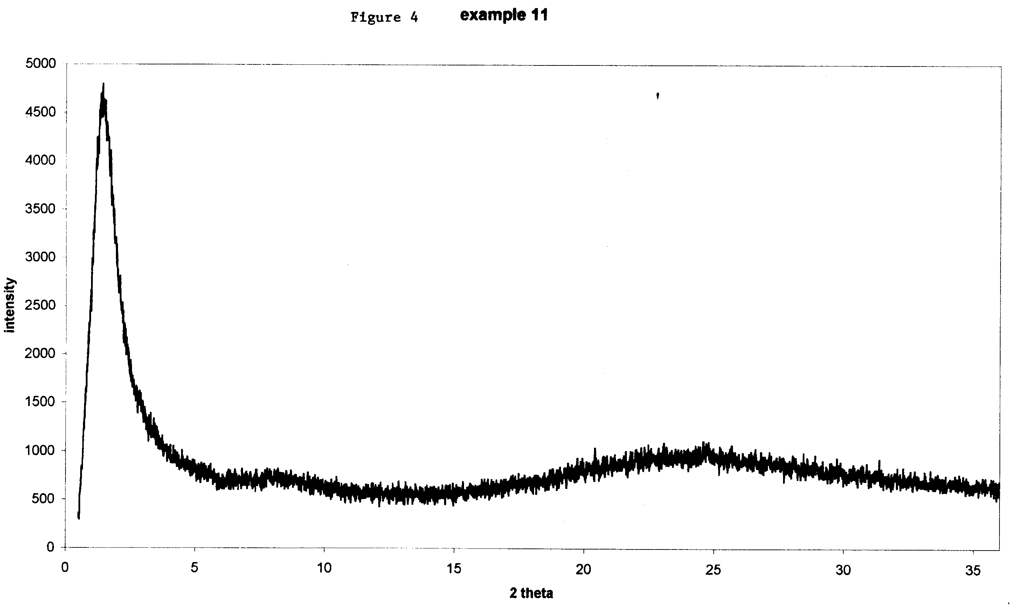

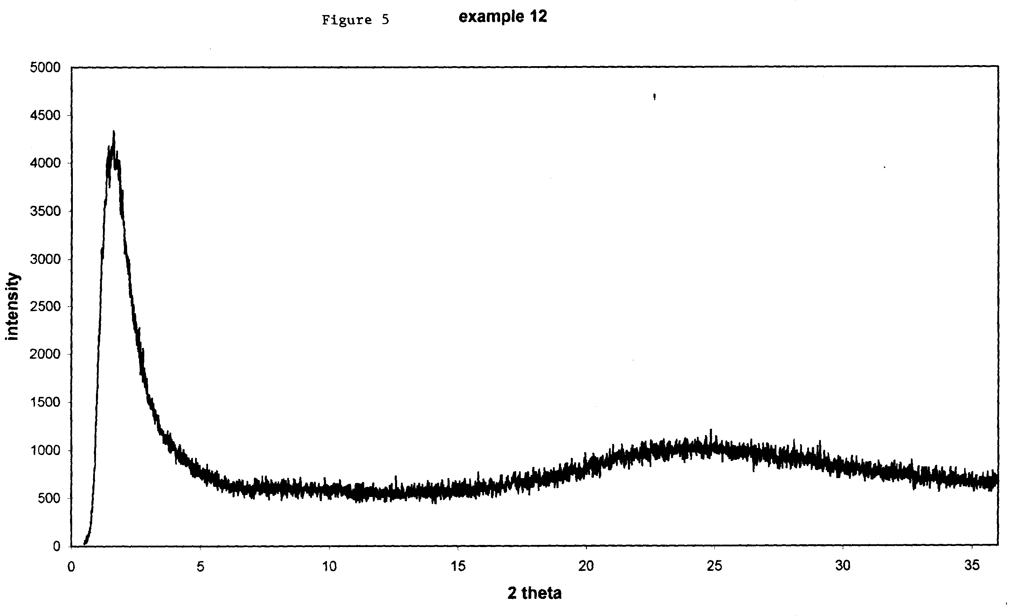

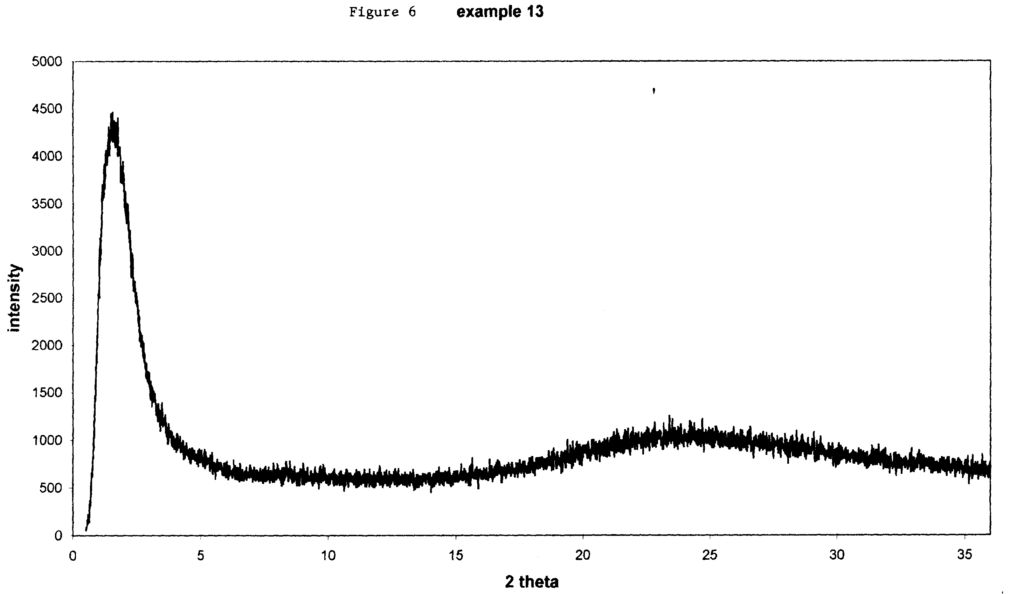

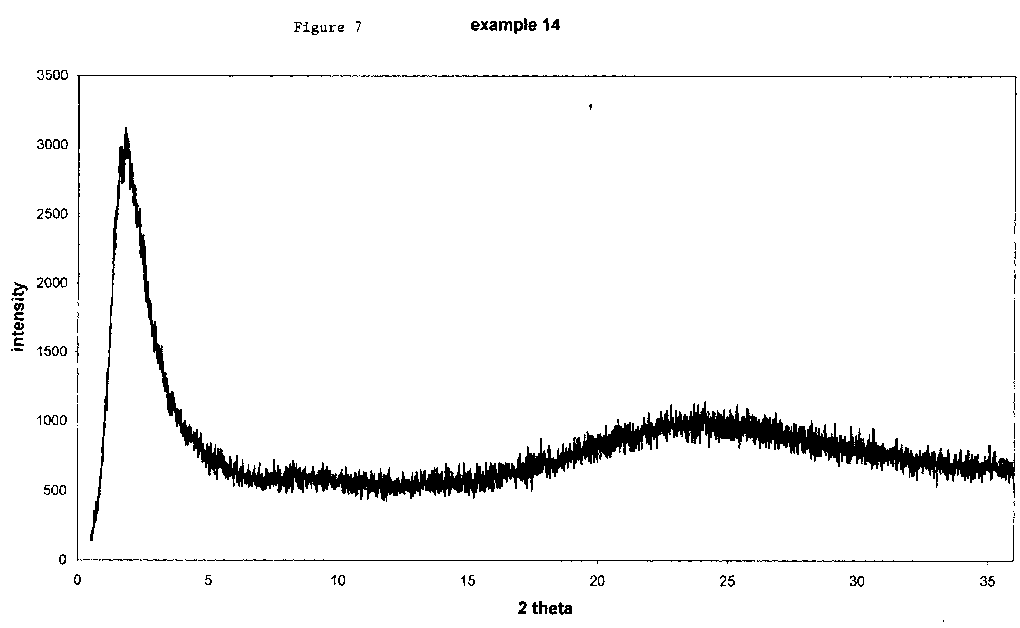

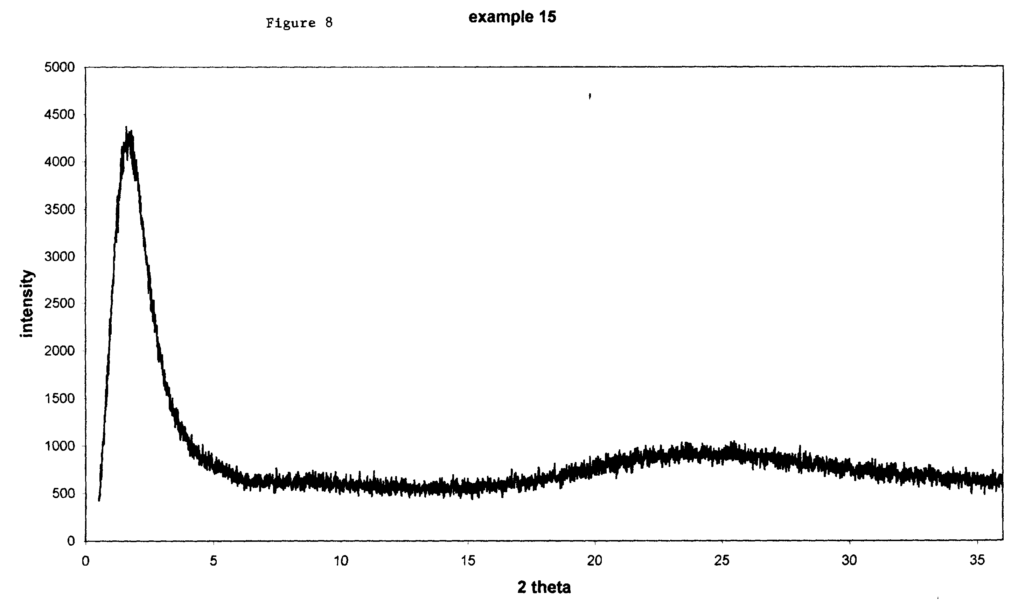

The XRD patterns of the products of examples 11-15 are shown in the figures4-8.

## Claims

1. Process for the preparation of a mesoporous, amorphous silicate material with an average mesopore size of from 2 to 25 nm, said process comprising providing an aqueous phase of silicate material, having dispersed therein an organic compound having the capability of providing hydrogen bonding with silica, ageing the said aqueous phase, followed by drying the material by evaporation of water therefrom and calcination of the dried material at a temperature of at least 400°C.

2. Process according to claim 1, wherein the silicate material is selected from tetraethyl orthosilicate, fumed silica, sodium silicate and silica sol.

3. Process according to claim 1 or 2, wherein the said organic material is selected from the group of materials having a boiling point of at least 150°C and being able to interact with silica by hydrogen bonding, preferably selected from the group of triethanolamine, glycerol, diethylene glycol, triethylene glycol and tetraethylene glycol.

4. Process according to claims 1-3, wherein the aqueous phase additionally contains a source of ions selected from the group of ions of titanium, vanadium, zirconium, gallium, manganese, zinc, iron or alkalimetal.

5. Process according to claims 1-3, wherein the aqueous phase additionally contains a source of aluminium ions

6. Process according to claim 5, wherein said source of aluminium ions is selected from the group of aluminium salts, aluminium alkoxides and alkalimetal aluminates.

7. Process according to claims 1-6, wherein said ageing is carried out at a temperature between 15 and 45°C, within a period of 0 to 48 hours.

8. Process according to claims 1-7, wherein the aged material is gradually heated to a temperature of 90-115°C and kept at that temperature for 6 to 48 hours.

9. Precursor for a mesoporous amorphous silicate material, comprising a silicate structure with mesopores having an average pore size of from 2 to 25 nm, said mesopores being filled with template molecules having the capability of providing hydrogen bonding with silica.

10. Precursor according to claim 9, wherein the said template molecule is selected from the group of triethanolamine, glycerol, diethylene glycol, triethylene glycol and tetraethylene glycol.

11. Mesoporous silicate material obtainable by removing the template molecules from the precursor according to claim 9 or 10.

12. Mesoporous, amorphous silicate material having a bimodal structure of micropores and mesopores, domains of said micropores being connected to said mesopores, wherein the average mesopore size, determined by N₂-porosimetry, is between 2 and 25 nm, and the average micropores size, determined by N₂-porosimetry, is between 0.7 and 1.5 nm, preferably between 0.8 and 1.2 nm.

13. Silicate material according to claim 11 or 12, wherein the material is based on silicate alone.

14. Silicate material according to claim 11-13, wherein the material contains additionally an amount of aluminium, homogeneously distributed in the structure of the silicate material.

15. Silicate material according to claim 14, wherein the atomic Si/Al ratio is at least 5.

16. Silicate material according to claims 11-15, wherein the material shows at most one peak in XRD.

17. Silicate material according to claim 16, wherein the material shows one peak at 2θ of 0.5 to 2.5°.

18. Silicate material according to claims 11-17, having a BET surface area between 50 and 1250 m²/g.

19. Silicate material according to claims 11-18, wherein the pore volume is between 0.3 and 2.0 ml/g as determined by N₂-porosimetry.

20. Silicate material obtainable by the process of anyone of the claims 1-8.
